**Europäisches Patentamt**

**European Patent Office**

**Office européen des brevets**

(19)

(11) Numéro de publication: **0 245 158**
**B1**

(12) # FASCICULE DE BREVET EUROPEEN

(45) Date de publication du fascicule du brevet:
**27.06.90**

(51) Int. Cl.⁵: **B64C 25/50**

(21) Numéro de dépôt: **87400979.8**

(22) Date de dépôt: **29.04.87**

(54) **Système de servocommande pour le train avant orientable d'un véhicule.**

(30) Priorité: **05.05.86 FR 8606472**

(43) Date de publication de la demande:
**11.11.87 Bulletin 87/46**

(45) Mention de la délivrance du brevet:
**27.06.90 Bulletin 90/26**

(84) Etats contractants désignés:
**DE GB IT NL**

(56) Documents cités:
**FR-A- 1 467 644**
**US-A- 2 957 649**

(73) Titulaire: **AEROSPATIALE SOCIETE NATIONALE INDUSTRIELLE Société Anonyme dite:, 37, Boulevard de Montmorency, F-75016 Paris(FR)**

(72) Inventeur: **Goicoechea, José-Raymond, 30, rue Toulouse Lautrec, F-31700 Blagnac(FR)**

(74) Mandataire: **Bonnetat, Christian et al, CABINET BONNETAT 23, Rue de Léningrad, F-75008 Paris(FR)**

## Description

La présente invention concerne un système de servocommande pour le train avant orientable d'un véhicule, notamment d'un aéronef roulant sur le sol.

On sait que, dans une plage de valeurs déterminée de la vitesse d'un véhicule, les roues directrices de ce dernier sont soumises à un ensemble de mouvements complexes se traduisant par un flottement desdites roues directrices. Ce phénomène est, de manière générale, désigné par le terme de "shimmy" et il nuit à l'efficacité et à la précision de la direction dudit véhicule suivant une trajectoire désirée.

Par ailleurs, on sait que les asservissements des systèmes de servocommande sont sujets, du fait même de leur structure en boucle fermée, à des phénomènes d'instabilié.

Par suite, lorsque, comme cela est le cas pour les aéronefs, le train avant orientable d'un véhicule est commandé par un système de servocommande, la combinaison des effets du shimmy et de l'instabilité de l'asservissement correspondant peut rendre incontrôlable la trajectoire du véhicule. C'est ainsi qu'il peut en résulter la sortie, hors de la piste de roulement, d'un aéronef roulant sur le sol, lors d'un atterrissage ou d'un envol. Une telle sortie hors de la piste de roulement peut entraîner la destruction de l'aéronef et causer des blessures, éventuellement mortelles, aux passagers et aux membres d'équipage dudit aéronef.

Le plus souvent, le système de servocommande du train avant orientable d'un aéronef est de type électrohydraulique et on a déjà tenté de remédier aux inconvénients précités en utilisant, dans de tels systèmes, un vérin hydraulique avec tiroir distributeur à découvrement. Toutefois, une telle solution n'est pas satisfaisante, car elle ne peut remédier qu'à des mouvements de shimmy correspondant à de faibles balourds des roues du train avant et est totalement inefficace lors de l'apparition de balourds importants, par exemple en cas de déchapage d'un pneumatique desdites roues. De plus, elle nuit beaucoup à la précision de la direction en augmentant la constante de temps de l'asservissement, ce qui est particulièrement désavantageux lorsque la direction de l'aéronef est commandé par le pilote automatique.

La présente invention a pour objet de remédier à ces inconvénients et de réaliser un système de servocommande pour le train avant orientable d'un véhicule qui, à la fois, est précis, stable et peu sensible au shimmy.

A cette fin, selon l'invention, le système de servocommande pour le train avant orientable d'un véhicule, dont au moins la partie inférieure munie d'au moins une roue peut tourner autour de son axe longitudinal, du type comportant :
- des moyens pour engendrer un ordre électrique représentatif d'une orientation désirée pour ladite partie inférieure dudit train avant ;
- des moyens d'actionnement en rotation de ladite partie inférieure dudit train avant ;
- des moyens de commande desdits moyens d'actionnement ;
- des moyens de détection de l'orientation réelle de ladite partie inférieure dudit train avant engendrant un signal électrique représentatif de ladite orientation réelle ; et
- des moyens permettant de soustraire ledit signal dudit ordre et adressant la différence obtenue auxdits moyens de commande, qui, par l'intermédiaire desdits moyens d'actionnement font tourner en correspondance ladite partie inférieure dudit train, est remarquable :
- en ce qu'il comporte un filtre passe-haut dont l'entrée reçoit un signal contenant au moins une partie représentative des oscillations, autour de son axe longitudinal, auxquelles ladite partie inférieure dudit train avant est soumise et dont la sortie est reliée à un dispositif permettant de soustraire le signal de sortie dudit filtre passe-haut de la différence entre ledit ordre et ledit signal représentatif de l'orientation réelle ; et
- en ce que la bande passante dudit filtre passe-haut englobe la fréquence d'oscillation propre de ladite partie inférieure du train autour de son axe longitudinal.

Ainsi, grâce à l'invention, on élimine du signal d'erreur dudit système de servocommande les oscillations à hautes fréquences de shimmy à grande amplitude. On améliore donc la réponse dynamique (à haute fréquence) du système, sans dégrader sa précision. On apporte donc une solution au problème faisant intervenir de façon antinomique la précision, la stabilité et le shimmy. On peut ainsi supprimer au moins partiellement les vibrations de grande amplitude qui prennent naissance dans la plage de vitesses du véhicule entourant la valeur de vitesse qui correspond à la fréquence propre du système de servocommande, tout en ayant un asservissement stable avec une marge de gain d'au moins 6 dB.

On sait que la fréquence propre d'une telle partie inférieure de train avant orientable est liée à la raideur en rotation que les moyens de commande imposent à cette partie inférieure et à la masse de celle-ci. Plus précisément, le carré de la pulsation correspondant à cette fréquence propre est égal au rapport de cette raideur et de cette masse.

Par exemple, dans le cas où la fréquence propre de la partie inférieure de train avant est de 16 Hz, on choisit pour la fréquence de coupure du filtre passe-haut une valeur de l'ordre de 8 Hz. Ainsi, le filtre passe-haut ne laisse passer que les fréquences supérieures à 8 Hz et élimine donc ces fréquences du signal d'erreur de l'asservissement.

Dans un premier mode de réalisation, l'entrée du filtre passe-haut reçoit la totalité de la différence entre ledit ordre et ledit signal représentatif de ladite orientation réelle de la partie inférieure du train avant. Du fait de ses caractéristiques de transmission, le filtre passe-haut n'introduit aucune correction pour les fréquences inférieures à sa fréquence de coupure. En revanche, il élimine du signal d'erreur de l'asservissement la totalité des fréquences supérieures à sa fréquence de coupure.

Dans une variante de réalisation, concernant le cas dans lequel lesdits moyens d'actionnement comportent au moins un vérin à double action, ledit système comporte des moyens pour capter en continu la différence de pression entre les deux chambres dudit vérin et ladite différence de pression est appliquée à l'entrée dudit filtre passe-haut. Il va de soi que les variations de cette différence de pression est représentative des oscillations auxquelles est soumise ladite partie inférieure du train avant orientable.

Les figures du dessin annexé feront bien comprendre comment l'invention peut être réalisée. Sur ces figures, des références identiques désignent des éléments semblables.

La figure 1 est le schéma synoptique d'un exemple de réalisation du système de servocommande selon l'invention.

La figure 2 montre un mode de réalisation des moyens de correction conformes à l'invention.

La figure 3 est une vue en perspective d'un train avant orientable d'aéronef.

La figure 4 est une coupe schématique, selon la ligne IV-IV de la figure 3, illustrant les moyens hydrauliques d'actionnement en rotation du train avant de la figure 3.

La figure 5 montre une variante de réalisation des moyens de correction conformes à l'invention, associés au train avant de la figure 3 et aux moyens d'actionnement de la figure 4.

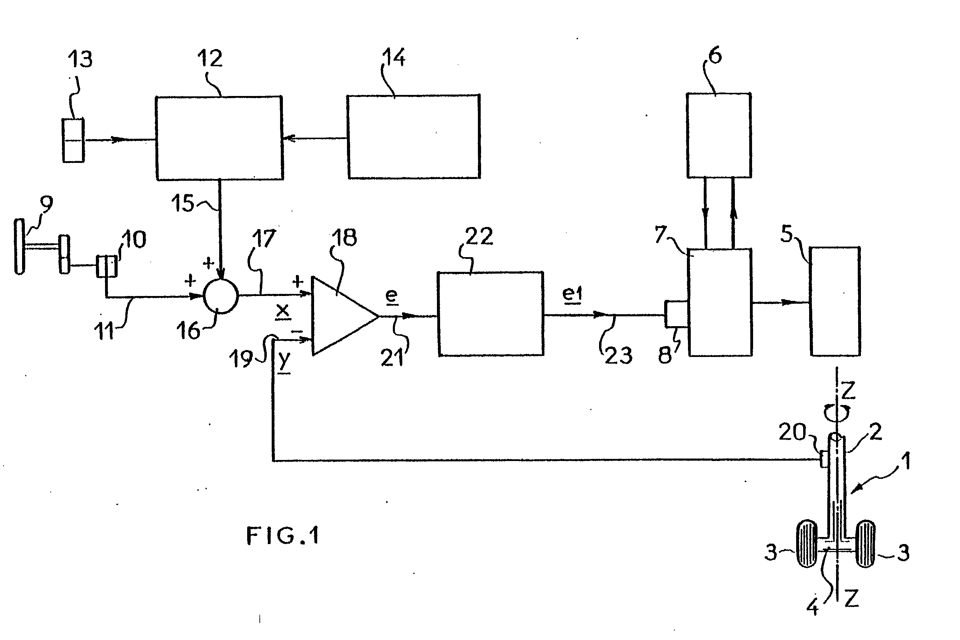

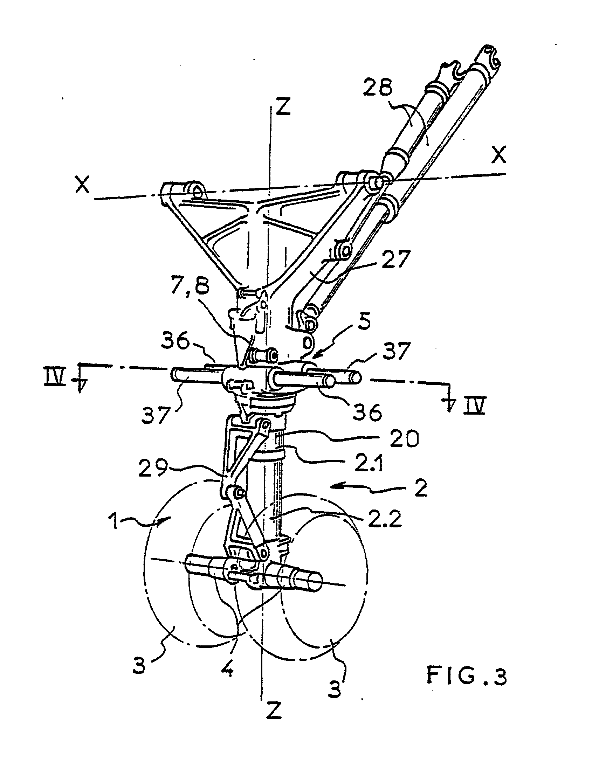

Le système de servocommande montré schématiquement sur la figure 1 est destiné à commander l'orientation du train avant directeur 1 d'un aéronef (non représenté). A cet effet ledit train avant directeur ·1 comporte un fût 2 monté rotatif, par rapport au reste de l'aéronef et dudit train, autour d'un axe vertical Z-Z. Par exemple, ledit train avant est du type comportant à sa partie inférieure deux roues jumelées 3, tournant autour d'un essieu double 4, orthogonal au fût 2. La rotation du fût 2 autour de l'axe Z-Z est obtenue par des moyens d'actionnement 5, par exemple un vérin hydraulique alimenté en fluide sous pression par une source 6, à travers une servovalve 7 à commande électrique 8.

Un volant 9, à la disposition du pilote (ou du copilote), est associé à un générateur électrique 10, par exemple du type rhéostat, susceptible d'engendrer à sa sortie 11 un ordre électrique correspondant à une orientation volontaire dudit volant 9 et représentatif d'une orientation désirée pour la partie inférieure 2,3,4 du train avant 1 autour de son axe Z-Z.

De plus, un calculateur logique 12 reçoit des ordres de commande de direction, d'une part, du palonnier 13 à la disposition du pilote (ou du copilote) et, d'autre part, du système de pilotage automatique 14. Ainsi, lorque le pilote agit sur le palonnier 13 pour commander la gouverne de direction ou bien encore lorsque le système de pilotage automatique guide l'avion au sol, un ordre électrique de commande de direction apparaît sur la sortie 15 du calulateur logique 12.

Les deux ordres apparaissant sur les sorties 11 et 15 sont additionnés dans un sommateur 16 qui adresse un ordre résultant $x$ à l'entrée positive 17 d'un amplificateur différentiel 18.

Par ailleurs, l'entrée négative 19 de l'amplificateur différentiel 18 reçoit un signal électrique $y$ provenant d'un capteur 20, monté sur le fût 2 et suceptible d'indiquer l'orientation instantanée réelle de la partie inférieure 2,3,4 du train 1 autour de l'axe Z-Z.

Par suite, à la sortie 21 de l'amplificateur différentiel 18 apparaît le signal de commande (ou signal d'erreur)

$$e = G (x-y),$$

expression dans laquelle G désigne le gain de l'amplificateur différentiel 18.

Selon l'invention, le signal de commande $e$ est adressé à un dispositif de correction 22 qui, à partir du signal $e$, élabore un signal corrigé $e1$ qu'il adresse à l'entrée 23 de la servovalve 8.

Avant de décrire plus en détail le dispositif de correction 22, objet de la présente invention, on examinera le fonctionnement du système constitué des seuls éléments 1 à 21, dans lequel le signal d'erreur $e$ apparaisant à la sortie 21 de l'amplificateur différentiel 18 est directement appliqué à l'entrée 23 de la commande 7 de la servovalve 8.

Dans un tel système 1-21, de façon connue, l'asservissement en orientation du train 1 à la valeur désirée $x$, fixe ou variable, résulte d'une oscillation de la partie inférieure 2,3,4 dudit train 1 autour de l'axe Z-Z, de part et d'autre de la position correspondant à ladite valeur $x$, sous l'action alternativement dans un sens puis dans l'autre du vérin 5. Par suite, le signal $y$ est alternatif.

Le signal $e$ est donc lui-même alternatif. C'est d'ailleurs ce mode de fonctionnement, inhérent au principe d'un système de servocommande de ce type, qui peut soulever des difficultés en ce qui concerne la stabilité et/ou la précision de l'asservissement, même lorsqu'aucune oscillation forcée autour de l'axe Z-Z n'est introduite du fait du roulement des roues 3 sur le sol.

Maintenant, si du fait du roulement des roues 3, la partie inférieure, 2,3,4 du train 1 est soumise à des oscillations forcées, telles que celles par exemple résultant de l'apparition du phénomène de shimmy, le capteur 20 prend en compte, en fréquence et en amplitude, ces oscillations forcées. Par suite, le signal alternatif $y$ peut prendre des amplitudes et des fréquences élevées, de sorte que le signal de commande $e$ de la servovalve 7 subit des variations telles que le vérin 5, compte tenu de son inertie de fonctionnement, ne peut plus agir suffisamment rapidement sur le fût 1 pour compenser lesdites oscillations forcées. L'asservissement n'est alors plus assuré et l'aéronef peut dévier de la trajectoire de roulement que le pilote (par les organes 9 ou 13) ou que le dispositif de pilotage automatique 14 voudrait lui imposer. Il peut en résulter une sortie de piste.

Même dans le cas où ces vibrations forcées ne sont pas suffisamment importantes pour entraîner un accident, elles sont gênantes et dangereuses, pouvant entraîner des interruptions de décollage ou des détériorations par vibrations, notamment en ce qui concerne le matériel de radio ou de navigation disposé dans la partie avant de l'aéronef.

Ces oscillations forcées provenant pour l'essentiel des balourds des roues 3 roulant sur le sol, leur fréquence est liée à la vitesse de roulage de l'aéronef. Leur amplitude dépend de la masse de l'ensemble de la partie inférieure rotative 2,3,4 du train 1 et de la rigidité en rotation de cet ensemble rotatif 2,3,4 par rapport au reste dudit train 1.

Plus précisément, si on analyse mathématiquement le comportement de l'ensemble rotatif 2,3,4 on détermine, de façon connue, que ledit ensemble rotatif, 2,3,4 possède une fréquence propre d'oscillation, dont la pulsation $w$ est égale à la racine carrée du rapport entre la raideur hydraulique $R$ que le vérin 5 confère à l'ensemble rotatif 2,3,4 par rapport au reste dudit train 1 et la masse M de cet ensemble rotatif. Ainsi,

$$w = \left(\frac{R}{M}\right)^{1/2}$$

De façon également connue, cette raideur R se calcule par l'expression :

$$R = \frac{2.B.S^2}{V}$$

dans laquelle :
- B est le module de compressibilité du fluide hydraulique délivré par la source 6 au vérin 5 ;
- S est l'aire de la section du vérin 5 ; et
- V est le volume total de fluide hydraulique admis dans le vérin 5.

L'expérience et le calcul montrent que l'amplitude des oscillations forcées appliquées à l'ensemble rotatif 2,3,4 du train orientable 1 passe par un maximum lorsque la fréquence desdites oscillations forcées est égale à la fréquence propre dudit ensemble rotatif 2,3,4, c'est-à-dire lorsque la vitesse de l'aéronef passe par une valeur donnant auxdites oscillations une fréquence égale à ladite fréquence propre.

Le dispositif 22 de l'invention est destiné à éviter ces inconvénients et à réduire considérablement, si ce n'est totalement, l'amplitude des oscillations forcées au passage de ladite valeur de vitesse correspondant à la fréquence propre dudit ensemble rotatif 2,3,4.

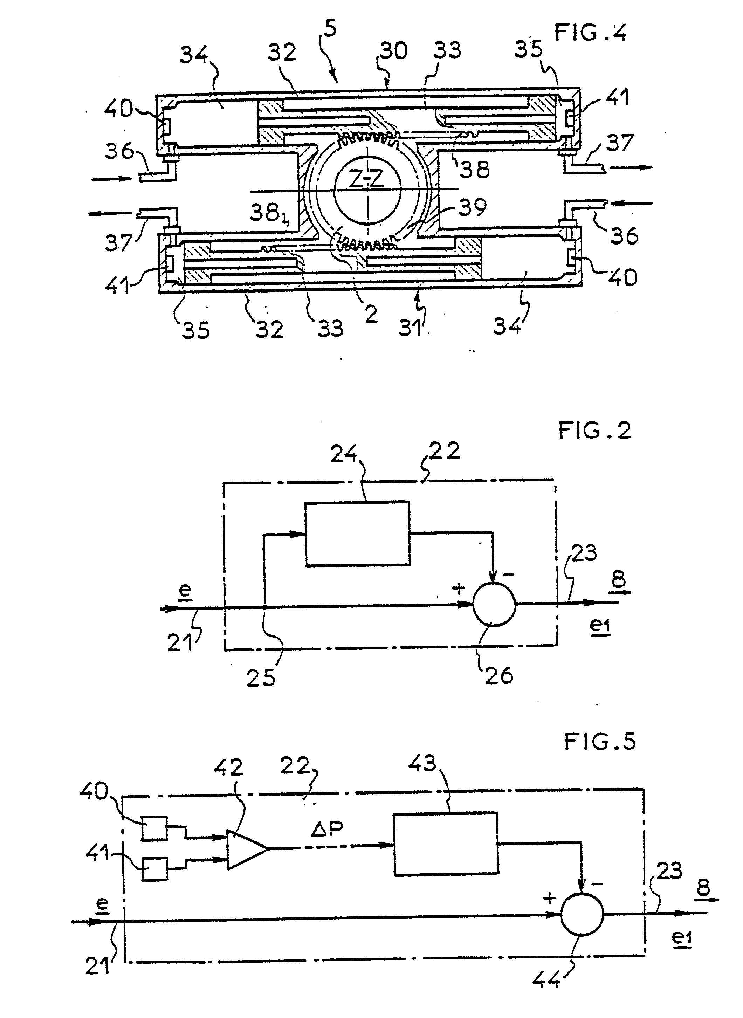

Dans le mode de réalisation du dispositif 22 montré par la figure 2, on prévoit un filtre passe-haut 24, dont l'entrée est reliée (en 25) à la sortie 21 de l'amplificateur différentiel 18 et dont la sortie est reliée à l'entrée négative d'un soustracteur 26. L'entrée positive du soustracteur 26 est reliée au point 25 et la sortie de ce soustracteur 26 est reliée à l'entrée 23 de la servovalve 8. Ainsi, le filtre passe-haut 24 est monté en parallèle sur la liaison 21-23 et reçoit le signal d'erreur $e$. Sa fréquence de coupure est choisie à une valeur inférieure à la fréquence propre de l'ensemble 2,3,4.

Ainsi, pour les basses fréquences inférieures à cette fréquence de coupure, le filtre passe-haut agit comme une coupure et n'adresse aucun signal au soustracteur 26. Le signal $e1$ présent à l'entrée 23 de la servovalve 8 est donc identique au signal d'erreur (ou de commande) $e$ présent à la sortie 21 de l'amplificateur opérationnel 18.

En revanche, pour toutes les fréquences du signal $e$ supérieures à sa fréquence de coupure, le filtre passe-haut 24 est conducteur, de sorte que ces fréquences élevées sont soustraites du signal $e$ au niveau du soustracteur 26. Le signal $e1$ est alors le signal $e$ amputé des fréquences élevées.

Ainsi, malgré l'apparition du shimmy, les roues 3 peuvent être efficacement guidées par le système de servocommande, qui en élimine les effets.

Sur la figure 3, on a représenté un exemple de réalisation d'un train avant directeur 1 pour aéronef utilisable dans la mise en oeuvre de la présente invention.

Ce train avant directeur 1 comporte un bâti 27 articulé autour d'un axe transversal X-X de l'aéronef et pouvant pivoter entre une position rétractée (non représentée) pour laquelle ledit train est logé à l'intérieur d'une soute de l'aéronef et une position déployée (représentée sur la figure 3) pour laquelle ledit train 1 est sorti de son logement, les roues 3 étant en appui sur le sol et l'axe Z-Z étant, par exemple, vertical. Le passage du train 1 d'une desdites positions à l'autre est obtenu au moyen de vérins 28, articulés à une de leurs extrémités sur la structure de l'aéronef et à leurs autres extrémités au bâti 27.

Le fût 2 est monté rotatif par rapport au bâti 27, autour de l'axe Z-Z et il comporte un tube longitudinalement rigide 2-1 relié au bâti 27 et incorporant le détecteur d'orientation 20 et un tube de longueur élastiquement variable 2-2, relié d'un côté au tube tournant 2-1 et de l'autre au double essieu 4 et aux roues 3. Un compas 29 relie les parties 2-1 et 2-2 du fût 2.

Le vérin 5 est interposé entre le bâti pivotant 27 et le tube 2-1. Comme on peut le voir sur la coupe schématique de la figure 4, ce vérin 5 comporte deux vérins élémentaires 30 et 31 à double effet. Chaque vérin 30 ou 31 comporte un cylindre 32 à l'intérieur duquel est logé un piston flottant 33, délimitant dans ledit cylindre 32 deux chambres d'extrémité 34 et 35. Les chambres 34 sont reliées à la source de fluide sous pression 6 par des liaisons 36. De même, les chambres 35 sont reliées à ladite source 6 par des liaisons 37.

Chaque piston 33 comporte une partie 38 formant crémaillère et en prise avec une couronne dentée 39 coaxiale au fût 2 et solidaire de celui-ci. Les vérins 30 et 31 sont disposés parallèlement l'un à l'autre de part et d'autre dudit fût 2 et sont montés de façon que leurs pistons se déplacent en sens inverses l'un de l'autre lorsqu'ils coopèrent pour faire tourner ledit fût 2 dans le même sens. Ainsi, les chambres 34 des deux vérins 30 et 31 sont diamètralement opposées l'une de l'autre par rapport au fût 2 et sont alimentées ou évacuées simultanément en fluide sous pression. De même, les chambres 35 des deux vérins 30 et 31 sont diamétralement opposées l'un de l'autre par rapport au fût 2 et sont évacuées ou alimentées simultanément en fluide sous pression.

Dans au moins l'une des deux chambres 34 est prévu un capteur de pression 40 susceptible de fournir la pression du fluide qui s'y trouve. De même, dans au moins la chambre 35 du vérin 30,31, dont la chambre 34 est équipée d'un capteur de pression 40, est disposé un capteur de pression 41 mesurant la pression fluide. Ainsi, grâce à un soustracteur 42 (voir également la figure 5), il est possible de connaître la différence ΔP des pressions régnant respectivement à l'intérieur des chambres 34 et 35 d'au moins l'un des vérins 30 ou 31, en reliant les sorties des capteurs concernés 40 et 41 aux entrées dudit soustracteur 42.

On comprendra aisément que les variations de la différence de pression ΔP est représentative des oscillations auxquelles l'ensemble 2,3,4 est soumis autour de l'axe Z-Z.

Ainsi, dans le mode de réalisation du dispositif 22 montré par la figure 5, un filtre passe-haut 43 reçoit le signal ΔP à son entrée. La sortie du filtre passe-haut 43 est reliée à l'entrée négative d'un soustracteur 44, dont l'entrée positive est reliée à la sortie 21 de l'amplificateur différentiel 18 et dont la sortie est reliée à l'entrée 23 de la servovalve 8.

Ainsi, lorsque la fréquence du signal ΔP (représentatif des oscillations de l'ensemble 2,3,4) dépasse la fréquence de coupure du filtre 43, ce signal ΔP est soustrait du signal $e$ pour fournir le signal corrigé $e1$ à la servovalve. Ce signal $e1$ est donc débarrassé des fréquences élevées pertubatrices. Le résultat obtenu est donc semblable à celui obtenu par le dispositif de la figure 2.

De préférence, la fonction de transfert, sous forme laplacienne, des filtres passe-haut 24 et 43 est du type

$$\frac{k\ Tp}{1+Tp},$$

expression dans laquelle :
- k est une constante
- T est la constante de temps
- p est la variable de Laplace.

On remarquera qu'en choisissant de façon convenable la constante $k$, on peut régler la correction apportée au signal d'erreur $e$ pour obtenir le signal de commande $e1$.

Par exemple, dans le dispositif de la figure 2, si on choisit k = 2, on voit que la fonction de transfert du dispositif 22 est égale à

$$\frac{1-Tp}{1+Tp},$$

puisque

$$e1 = e - \frac{2tp}{1+Tp}\ e = \frac{(1-Tp)}{(1+Tp)}\ e$$

## Revendications

1 - Système de servocommande pour le train avant orientable (1) d'un véhicule dont au moins la partie inférieure (2,3,4) munie d'au moins une roue (3) peut tourner autour de son axe longitudinal (Z-Z), du type comportant :
- des moyens (9,10,12,13,14) pour engendrer un ordre électrique ($\underline{x}$) représentatif d'une orientation désirée pour ladite partie inférieure (2,3,4) dudit train avant (1) ;
- des moyens (5) d'actionnement en rotation de ladite partie inférieure (2,3,4) dudit train avant (1) ;
- des moyens (7,8) de commande desdits moyens d'actionnement (5) ;
- des moyens (20) de détection de l'orientation réelle de ladite partie inférieure (2,3,4) dudit train avant (1), engendrant un signal électrique ($\underline{y}$) représentatif de ladite orientation réelle ; et
- des moyens (18) permettant de soustraire ledit signal ($\underline{y}$) dudit ordre ($\underline{x}$) et adressant la différence (e = x - y) obtenue auxdits moyens de commande (7,8), qui, par l'intermédiaire desdits moyens d'actionnement (5) font tourner en correspondance ladite partie inférieure (2,3,4) du train (1), caractérisé :
- en ce qu'il comporte un filtre passe-haut (24,43) dont l'entrée reçoit un signal contenant au moins une partie représentative des oscillations autour de son axe longitudinal auxquelles ladite partie inférieure (2,3,4) dudit train avant (1) est soumise et dont la sortie est reliée à un dispositif (26,44) permettant de soustraire le signal de sortie dudit filtre passe-haut (24,43) de ladite différence (e = x - y) entre ledit ordre ($\underline{x}$) et ledit signal (y) représentatif de l'orientation réelle ; et
- en ce que la bande passante dudit filtre passe-haut (24,43) englobe la fréquence d'oscillation propre de ladite partie inférieure (2,3,4) du train (1) autour de son axe longitudinal.

2 - Système de servocommande selon la revendication 1, caractérisé en ce que l'entrée dudit filtre passe-haut (24) reçoit la totalité de ladite différence ($\underline{e}$) délivrée par les moyens de soustraction (18).

3 - Système de commande selon la revendication 1, dans lequel lesdits moyens d'actionnement comportent au moins un vérin à double action, caractérisé en ce qu'il comporte des moyens (40,41,42) pour appliquer en continu la différence de pression entre les deux chambres dudit vérin à l'entrée dudit filtre passe-haut (43).

4 - Système de servocommande selon l'une quelconque des revendications 1 à 3, caractérisé en ce que, sous forme laplacienne, la fonction de transfert dudit filtre passe-haut (24,43) est égale à :

$$\frac{kTp}{1+Tp}$$

expression dans laquelle :
- k est une constante
- T est la constante de temps et
- p la variable de Laplace.

## Patentansprüche

1. Servosteuersystem für das lenkbare Bugfahrwerk (1) eines Fahrzeuges, dessen mit wenigstens einem Rad (3) ausgestattete wenigstens untere Partie (2, 3, 4) sich um ihre Längsachse (Z–Z) drehen kann, mit den Merkmalen:
– Mittel (9, 10, 12, 13, 14) zur Erzeugung eines elektrischen Befehls (x), der eine gewünschte Richtung der unteren Partie (2, 3, 4) des Bugfahrwerks (1) darstellt;
– Betätigungsmittel (5) zur Drehung der unteren Partie (2, 3, 4) des Bugfahrwerks (1);
– Steuermittel (7, 8) der Betätigungsmittel (5);
– Mittel (20) zur Erfassung der wirklichen Richtung der unteren Partie (2, 3, 4) des Bugfahrwerks (1), welche ein elektrisches Signal (y) erzeugen, das die wirkliche Richtung darstellt; und
– Mittel (18) zum Subtrahieren des Signals (y) von dem Befehl (x) und zum Adressieren der erhaltenen Differenz (e = x − y) an die Steuermittel (7, 8), welche mittels der Betätigungsmittel (5) die untere Partie (2, 3, 4) des Bugfahrwerks (1) entsprechend drehen, dadurch gekennzeichnet,
– daß es einen Hochpaßfilter (24, 43) aufweist, dessen Eingang ein Signal zugeführt wird, das wenigstens einen repräsentativen Teil der Schwingungen um ihre Längsachse enthält, denen die untere Partie (2, 3, 4) des Bugfahrwerks (1) unterworfen ist, und dessen Ausgang mit einer Vorrichtung (26, 44) verbunden ist, mit der das Ausgangssignal des Hochpaßfilters (24, 43) von der Differenz (e = x − y) zwischen dem Befehl (x) und dem die wirkliche Richtung darstellenden Signal (y) subtrahiert werden kann; und
– daß die Durchlaß-Bandbreite des Hochpaßfilters (24, 43) die Eigenfrequenz der Schwingungen der unteren Partie (2, 3, 4) des Bugfahrwerks (1) um ihre Längsachse einschließt.

2. Servosteuersystem nach Anspruch 1, dadurch gekennzeichnet, daß dem Einlaß des Hochpaßfilters (24) die gesamte, von den Subtraktionsmitteln (18) gelieferte Differenz (e) zugeführt wird.

3. Servosteuersystem nach Anspruch 1, bei dem die Betätigungsmittel wenigstens einen doppeltwirkenden Hubzylinder aufweisen, dadurch gekennzeichnet, daß Mittel (40, 41, 42) vorgesehen sind, um die Druckdifferenz der beiden Kammern des Hubzylinders ununterbrochen am Eingang des Hochpaßfilters (43) anzulegen.

4. Servosteuersystem nach einem der Ansprüche 1 bis 3, dadurch gekennzeichnet, daß die Übertragungsfunktion des Hochpaßfilters (24, 43) in Laplacescher Form lautet:

$$\frac{kTp}{1+Tp}$$

wobei
– k eine Konstante ist
– T die Zeitkonstante ist und
– p die Laplace-Variable ist.

## Claims

1. Servo-control system for the steerable front wheels or nose gear (1) of a vehicle, at least the lower part (2, 3, 4) of which having at least one wheel (3) may rotate about its longitudinal axis (Z-Z), of the type including:
– means (9, 10, 12, 13, 14) for generating an electric order (x) representative of a desired orientation for said lower part (2, 3, 4) of said nose gear (1);
– actuation means (5) for causing rotation of said lower part (2, 3, 4) of said nose gear (1);
– means (7, 8) for controlling said actuation means (5);
– means (20) for detecting the real orientation of said lower part (2, 3, 4) of said nose gear (1) generating an electric signal (y) representative of said real orientation; and
– means (18) for subtracting said signal (y) from said order (x) and feeding the difference (e = x − y) obtained to said control means (7, 8) which, through said actuation means (5), cause said lower part (2, 3, 4) of said gear (1) to rotate correspondingly, characterized:
– in that it comprises a high pass filter (24, 43) whose input receives a signal containing at least a representative part of the oscillations about its longitudinal axis, to which said lower part (2, 3, 4) of said nose gear (1) is subjected and whose output is connected to a device (26, 44) for subtracting the output signal of said high pass filter (24, 43) from said difference (e = x − y) between said order (x) and said signal (y) representative of the real orientation; and
– in that the pass band of said high pass filter (24, 43) covers the natural oscillation frequency of said lower part (2, 3, 4) of the gear (1) about its longitudinal axis.

2. Servo-control system according to claim 1, characterized in that the input of said high pass filter (24) receives the whole of said difference (e) delivered by the subtraction means (18).

3. Servo-control system according to claim 1, in which said actuating means include at least one double acting jack, characterized in that it comprises means (40, 41, 42) for continuously applying the pressure difference between the two chambers of said jack to the input of said high pass filter (43).

4. Servo-control system according to any one of claims 1 to 3, characterized in that in Laplacian form, the transfer function of said high pass filter (24, 43) is equal to:

$$\frac{kTp}{1+Tp}$$

in which expression:
– k is a constant,
– T is the time constant, and
– P is Laplace's variable.

FIG.1

EP 0 245 158 B1

FIG.3

FIG .4

FIG .2

FIG.5